Europäisches Patentamt

European Patent Office

Office européen des brevets

(19)

(11) Veröffentlichungsnummer : **0 088 868**
**B1**

# (12) EUROPÄISCHE PATENTSCHRIFT

(45) Veröffentlichungstag der Patentschrift :
09.10.85

(21) Anmeldenummer : 83100618.4

(22) Anmeldetag : 25.01.83

(51) Int. Cl.⁴ : **B 60 L 9/16, H 02 G 11/02,
B 65 H 75/42**

(54) **Gleisloses Untertagefahrzeug.**

(30) Priorität : 13.03.82 DE 3209294

(43) Veröffentlichungstag der Anmeldung :
21.09.83 Patentblatt 83/38

(45) Bekanntmachung des Hinweises auf die Patenterteilung : 09.10.85 Patentblatt 85/41

(84) Benannte Vertragsstaaten :
DE FR GB

(56) Entgegenhaltungen :
EP-A- 0 008 352
DE-A- 2 337 425
DE-A- 2 600 564
DE-C-   556 596
FR-A- 2 175 088
US-A- 3 632 906
US-A- 3 865 209
US-A- 4 108 264

(73) Patentinhaber : M.A.N. MASCHINENFABRIK AUGS-
BURG-NÜRNBERG Aktiengesellschaft
Bahnhofstrasse 66
D-4200 Oberhausen (DE)

(72) Erfinder : Oetringhaus, Walter, Gr.
Schwalbenweg 32
D-4200 Oberhausen 11 (DE)

## Beschreibung

Die Erfindung betrifft ein elektrisch angetriebenes, gleisloses Untertagefahrzeug mit Energieversorgung durch ortsfeste Energiequellen mittels einer Versorgungsleitung, die in Abhängigkeit von der Fahrbewegung zugspannungslos auf eine auf dem Fahrzeug befindliche Speichertrommel auf- und abgetrommelt wird, wobei auf dem Fahrzeug ein Drehstrommotor als Hauptantriebsmotor mit einer Kraftverteilungseinrichtung angeordnet ist, zwischen dieser und der Speichertrommel ein hydrostatischer Antrieb geschaltet ist, für dessen Steuerung eine Momentenregelung vorgesehen ist, und daß zur Beaufschlagung der Steuerung in Abhängigkeit vom Durchhang der freien, nicht getrommelten Versorgungsleitung eine die Versorgungsleitung abtastende, mit Rollen versehene Tastschwinge angeordnet ist, deren Oszillationssignale über einen Umwandler in Drucksignale umgewandelt werden.

Der Einsatz von dieselbetriebenen Fahrzeugen ist je nach den Bewetterungsverhältnissen in den verschiedenen Untertagebetrieben sehr problematisch. Die Belastungen der Grubenwetter durch die Abwärme und die Schadstoffe des Dieselmotors sind nicht immer kompensierbar, zumindest werden aber die Kosten für die Bewetterung durch den Einsatz von Dieselfahrzeugen stark erhöht. Aus diesem Grunde kommen zunehmend elektrisch angetriebene, gleislose Fahrzeuge zum Einsatz, bei denen diese belastenden Faktoren entfallen oder zumindest stark minimiert werden. Da Untertage-Lade- und Transportfahrzeuge große Mengen an Material in kurzen Zeiträumen laden, transportieren und wieder entladen müssen, eventuell bei gleichzeitiger Bewältigung von Steigungen, müssen ihre Antriebe entsprechend stark dimensioniert sein. Dies führt bei einer Mehrzahl von Verbrauchsstellen auf dem Fahrzeug mit eigenen Antriebsaggregaten zu baulichen Ausführungen des Untertagefahrzeugs, die im beengten Untertagebetrieb hinderlich sind. Die Energieversorgung wird durch eine Versorgungsleitung übernommen, die von ortsfesten Energiequellen im Untertagebetrieb zum Fahrzeug führt und dort auf einer Speichertrommel aufgetrommelt wird. Je nach Fahrtrichtung des Fahrzeugs muß nun die Versorgungsleitung auf- oder abgetrommelt werden. Die Drehrichtung und die Winkelgeschwindigkeit der Speichertrommel werden jeweils von der Zugspannung im Versorgungskabel abgeleitet. Eine ständige, mehr oder weniger hohe, schwellende Zugspannung in der Versorgungsleitung, die häufig zu peitschenden Bewegungen führt, bewirkt einen raschen Verschleiß und starke mechanische Beschädigungen der Versorgungsleitung. Aus diesem Grunde wurde bei Kabeltrommeln mit einem gesonderten Antriebsmotor schon vorgeschlagen, Änderungen des freien Durchhangs des Versorgungskabels mittels einer Abtastvorrichtung zu erfassen und auf eine elektrische Schaltvorrichtung zu übertragen (DE-C-556 596). Dies geschieht durch eine Pendelschwinge, die mittels Rollen am Versorgungskabel anliegt. In der DE-A-2 337 425 wird zusätzlich die Vermeidung der Zugspannung noch besonders angesprochen. In beiden Fällen bewirken die Steuersignale einer Drehzahländerung der Antriebsmotoren für die Trommeln. Solche drehzahlgesteuerten Elektromotoren (Stillstandsmotoren) sind besonders starken Belastungen ausgesetzt, wenn sie mit vollem Nennmoment aus dem Stillstand angefahren werden. Ein hoher Energieaufwand und eine große, schwere Bauweise für solche Antriebsmotoren sind erforderlich, um den Anforderungen im Untertagebetrieb gerecht zu werden. Der starke dynamische Reversierbetrieb Untertage, teilweise mit fast voll aufgetrommelter Versorgungsleitung, macht den Einsatz solcher Motoren im Untertagebetrieb unwirtschaftlich. Der in der DE-A-2 337 425 beschriebene Elektroantrieb baut durch die Anwendung eines zusätzlichen Antriebsmotors noch größer und hat besonders bei Einbringung des Maximalmomentes beim Anfahren der Trommel aus dem Stillstand hohe Energieverluste.

Bei dem Fahrzeug nach der EP-A-18 352 wird eine Tastschwingen-Steuerung verwendet, mit der eine möglichst zugspannungslose Auf- und Abspeicherung der Versorgungsleitung eines gleislosen Untertagefahrzeugs erzielt werden soll. Der Antrieb erfolgt mit Hilfe eines hydraulischen Motors, der gemäß Funktionsbeschreibung ein hydrostatischer Motor ist.

Das elektrisch angetriebene gleislose Erdbewegungsfahrzeug nach der US-A-3 865 209 weist ebenfalls einen hydrostatischen Motor für das Auf- und Abtrommeln der Versorgungsleitung auf. Dem Drehstrommotor als Hauptantriebsmotor ist eine Kraftverteilungseinrichtung in Form eines Übertragungsgetriebes zugeordnet. An die Kraftverteilungseinrichtung ist neben einem Drehmomentenwandler für den Fahrzeugantrieb eine Hydraulikpumpe für den hydrostatischen Antrieb angeschlossen.

Die Erfindung hat sich nun die Aufgabe gestellt, ein elektrisch angetriebenes, gleisloses Untertagefahrzeug weiter zu verbessern, so daß weder bei schneller Fahrtrichtungsänderung und bei Fahrgeschwindigkeitswechsel eine Zugspannung in der Versorgungsleitung noch beim Rückwärtsfahren Schlappseil auftritt. Auch bei Kurvenfahrt soll die Versorgungsleitung zugspannungsfrei in der Fahrzeugspur abgelegt werden. Eine vertikale und horizontale Auslenkung soll dabei in geregelten Grenzen gehalten werden.

Dies wird durch die im Hauptanspruch genannten Merkmale erreicht. Weitere Einzelheiten sind in den abhängigen Ansprüchen enthalten.

Der Einsatz von bisher stationär verwendeten Drehstrom-Asynchron-Motoren hat sich hier als besonders vorteilhaft erwiesen. Diese sind besonders gut gegen äußere Einflüsse zu schützen und können bei Bedarf vorteilhaft in schlagwettergeschützter Ausführung eingebaut werden. Die Übertragung der ungeregelten Leistung dieser Motoren auf den Fahrantrieb und die sonstigen Verbrauchsstellen des Fahrzeuges erfolgt über Verteilergetriebe oder eine sonstige Kraftverteilungseinrichtung. Die Verwendung eines ungeregelten Drehstrom-Asynchron-Motors als Hauptantriebsmotor bei gleislosen Untertagefahrzeugen mit einer Kraftverteilung auf eine Mehrzahl von Verbrauchsstellen, die zeitlich und in ihrer absoluten Höhe unterschiedliche Belastungen aufweisen, erbringt für den Hauptantriebsmotor eine Vergleichmäßigung der Gesamtbelastung, da sich die unterschiedlichen Einzellasten über die Kraftverteilungseinrichtung summieren.

Durch die Erfindung wird erreicht, daß weder bei schnellem Fahrtrichtungs- und Fahrgeschwindigkeitswechsel eine Zugspannung in der Versorgungsleitung, noch beim Rückwärtsfahren Schlappseil auftritt. Ebenfalls wird gewährleistet, daß kurzfristig das jeweils erforderliche Antriebsmoment auf die Speichertrommel gebracht wird, um einen einwandfreien Ablauf und Einlauf der Versorgungsleitung sicherzustellen. Auch bei Kurvenfahrt wird die Versorgungsleitung zugspannungsfrei in der Spur des Fahrzeuges auf dem Boden abgelegt, wobei es absolut torsionsfrei bleibt. Dies wird durch die Anordnung eines geregelten hydrostatischen Antriebs zwischen dem Hauptantriebsmotor und der Speichertrommel erreicht. Dabei ist die geringe Trägheit eines hydraulischen Systems von Vorteil, das bei entsprechender Regelung sehr schnell reagiert. Die zur Steuerung des hydrostatischen Antriebs verwendete Momentenregelung multipliziert den von der Abtastschwinge an der Versorgungsleitung ermittelten und übertragen Steuerdruck im geschlossenen Antriebskreis. um ein Vielfaches. Diese hochgesetzte Druck ist proportional dem Antriebsmoment der Speichertrommel. Um die Steuersignale für den hydrostatischen Antrieb erzeugen zu können, ist es erforderlich, die oszillierenden Bewegungen der Abtastschwinge in Drucksignale umzuwandeln.

Die Abtastschwinge ist erfindungsgemäß so ausgebildet, daß sie bei funktionellen Störungen der Kabeltrommel, durch Schlappseil oder Zugspannung der Versorgungsleitung eine vertikale Auslenkung über einen vorgegebenen oder einstellbaren Grenzwert erfährt und über entsprechende Steuervorrichtungen den Hauptantriebsmotor abschaltet und das Fahrzeug abbremst. Das gleiche geschieht bei horizontalem Auslenken der Abtastschwinge durch seitliches Ein- oder Auslaufen der Versorgungsleitung über einen vorgegebenen oder einstellbaren Grenzwert hinaus. Nach Zurücklegen von etwa 80 % des Regelweges drosselt die Tastschwinge über Steuervorrichtungen den Fahrantrieb des Fahrzeugs herab, um bei zu heftigem Anfahren ein Abschalten des Hauptantriebs zu vermeiden. Bei Einsatz eines schnellaufenden Hydraulikmotors im hydrostatischen Antrieb wird zwischen der hydrostatischen Pumpe und der Speichertrommel ein mechanisches Untersetzungsgetriebe eingeschaltet.

Durch das Einwirken der Tastschwinge auf den Hauptantrieb mit zwangsläufiger Abbremsung des Fahrzeugs wird eine Überschreitung der zulässigen Höchstgeschwindigkeit verhindert. Diese Überschreitung hätte zur Folge, daß bei Vorwärtsfahrt die Abtrommelgeschwindigkeit gegenüber der Fahrgeschwindigkeit nachhängt und das Versorgungskabel unzulässig gespannt wird und reißt. Bei Überschreitung der zulässigen Rückfahrgeschwindigkeit würde das Kabel unter das Fahrzeug geraten und überfahren werden. Dies hätte zunächst lose Kabelschlingen auf der Speichertrommel und im weiteren Verlauf ein Einklemmen des Kabels zwischen der Streckensohle und den Reifen zur Folge.

Die Erfindung ist nachfolgend an Hand eines Ausführungsbeispieles dargestellt, und zwar zeigen :

Figur 1　ein Untertage-Lade- und Transportfahrzeug in Seitenansicht,

Figur 2　das gleiche Fahrzeug in Draufsicht,

Figur 3　eine schematische Anordnung der An- und Abtriebe des Fahrzeugs,

Figur 4　die Tastschwinge in Seitenansicht,

Figur 5　die Tastschwinge in Draufsicht,

Figur 6　das Fahrzeug in einer Streckenkreuzung.

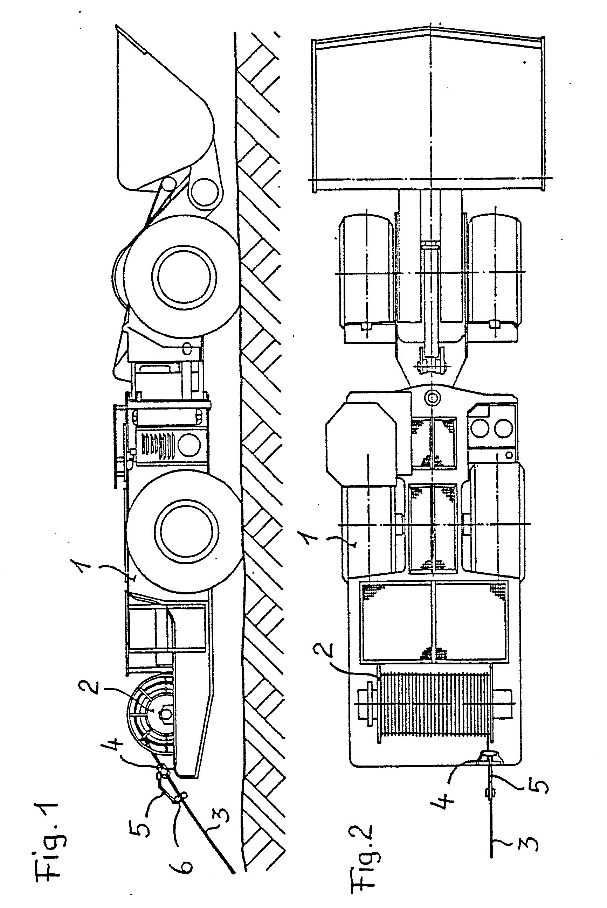

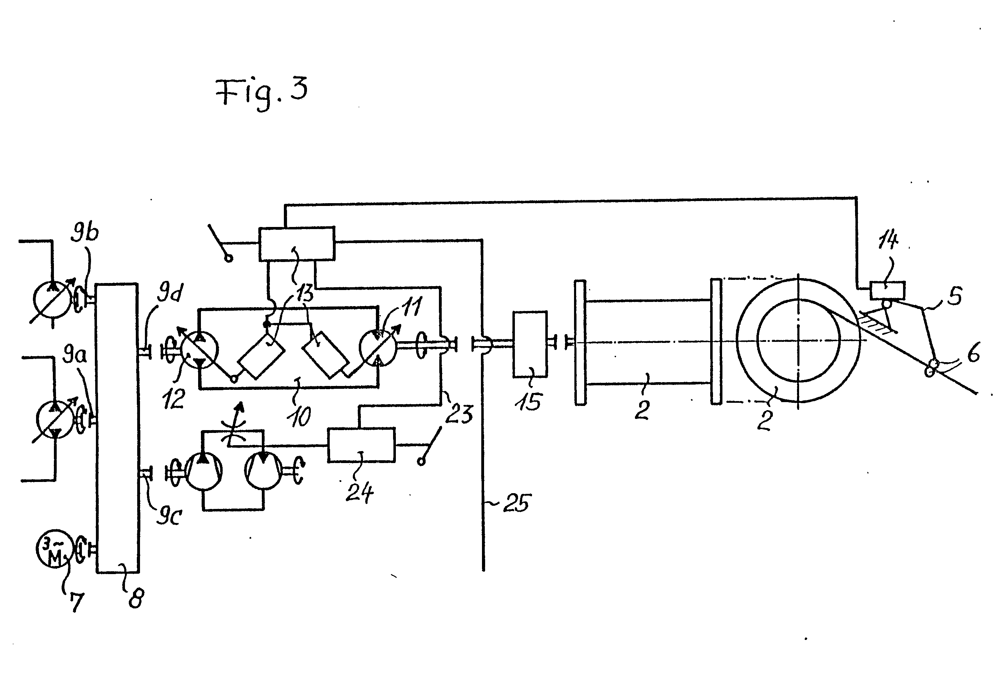

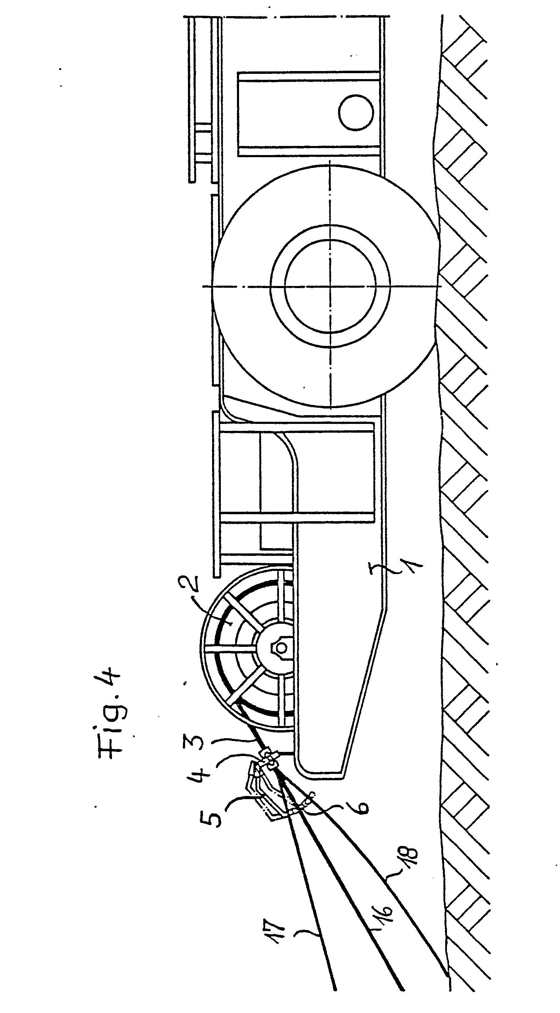

Auf dem elektrogetriebenen Untertage-Lade- und Transportfahrzeug 1 ist am Ende des Fahrzeuges eine Speichertrommel 2 angeordnet, auf der die Energieversorgungsleitung 3 auf- und abgetrommelt wird. Um die Winkelgeschwindigkeit der Speichertrommel 2 der Fahrgeschwindigkeit und -richtung des Fahrzeugs 1 anpassen zu können, ist auf der Spuleinrichtung 4, welche die Leitungswindungen geordnet auf der Speichertrommel 2 ablegt, eine Tastschwinge 5 angeordnet, die in ihrer Normalstellung an der zugspannungslos, frei durchhängenden Energieversorgungsleitung 3 mittels Rollen 6 anliegt. Wie in Fig. 3 schematisch dargestellt, ist hinter dem Hauptantriebsmotor 7 des Fahrzeugs 1 eine Kraftverteilungseinrichtung 8 vorgesehen, die mehrere Verbrauchsstellen 9a bis 9d antreibt. Diese Verbrauchsstellen können beispielsweise der Antrieb für die Lenkung des Fahrzeugs 9a, der Antrieb für die Arbeitshydraulik 9b und der Fahrantrieb 9c sein. Mit 9d ist der Antrieb für den hydrostatischen Speichertrommelantrieb 10 bezeichnet. Dieser besteht aus einem Hydraulikmotor 11 und einer hydrostatischen Pumpe 12. Die Steuerung des Speichertrommelantriebs 10 erfolgt durch Drucksignale, die im Kraftverstärker 13 erzeugt werden. Ausgangspunkt der Steuersignale sind die Bewegungen der Tastschwinge 5, die im Umwandler 14 aus Oszillationssignalen in Drucksignale umgewandelt werden. Zum besseren Verständnis des Schemas ist die Speichertrommel 2 in Vorder- und Seitenansicht dargestellt. Das mechanisme Untersetzungsgetriebe 15 wird im Bedarfsfall bei Einsatz eines schnellaufenden Hydraulikmotors 11 zwischen diesem und der Speichertrommel 2 angeordnet. In Fig. 4 ist mit 16 die Normalstellung der Energieversorgungsleitung 3 im Stillsant des Fahrzeuges 1 bezeichnet. Bei Anfahren vorwärts des Fahrzeugs 1 wird durch den ausgeübten Zug auf die Energieversorgungsleitung 3 diese sich in Richtung der Stellung 17 bewegen. Jede minimale Bewegung der Energieversorgungsleitung 3 wird über die Tastschwinge 5, den Umwandler 14 und den Kraftverstärker 13 auf den Speichertrommelantrieb 10 übertragen, so daß die Speichertrommel 2, dank der geringen Trägheit des hydraulischen Systems, fast unmittelbar mit dem Anfahren des Fahrzeugs 1 in Abtrommelrichtung angetrieben wird.

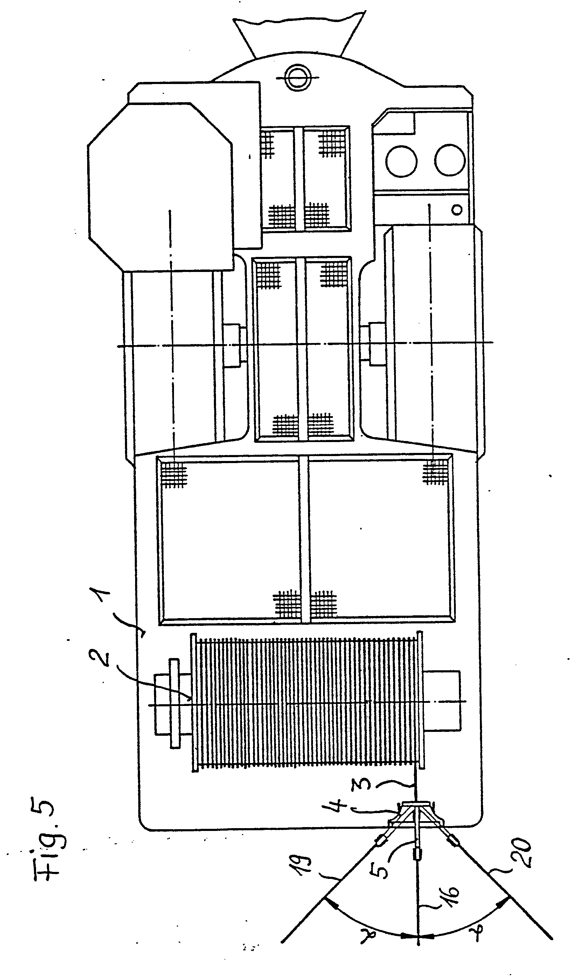

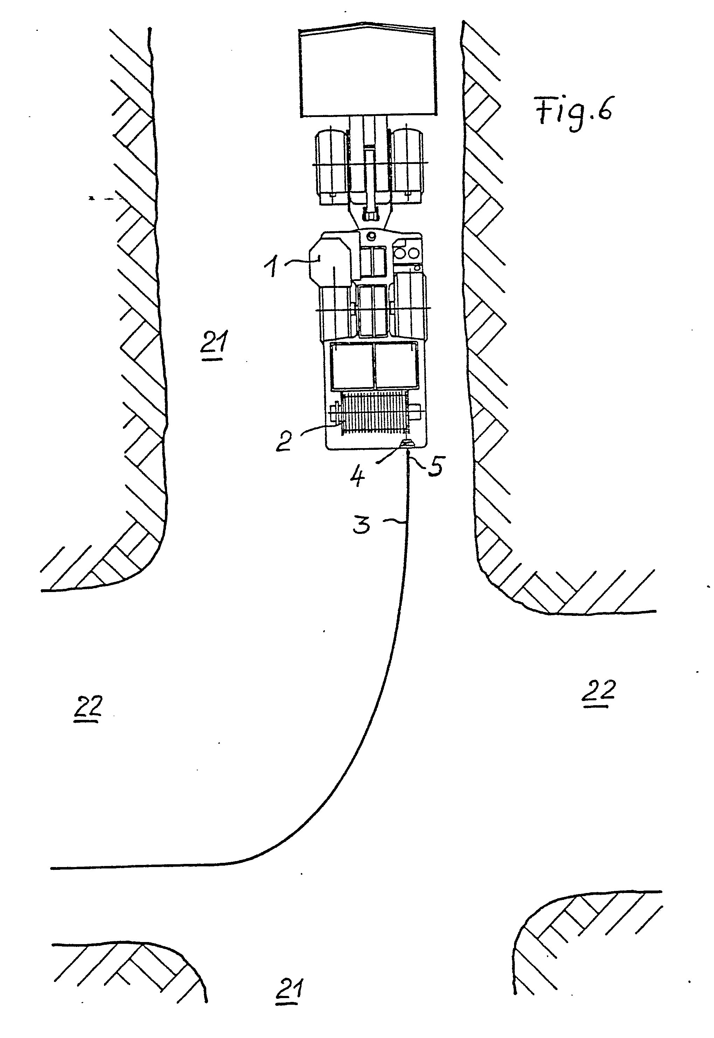

Das gleiche geschieht beim Rückwärtsfahren des Fahrzeugs 1. Dabei wird sich die Energieversorgungsleitung 3 in Richtung der Stellung 18 bewegen und, veranlaßt durch die Steuer- und Schaltmittel 5, 14, 13 und den Antreib 10, durch die Speichertrommel 2 aufgetrommelt. Entsprechend der Geschwindigkeit, mit der das Fahrzeug 1 vorwärts oder rückwärts fährt, wird auch die Energieversorgungsleitung 3 von der Speichertrommel 2 abgetrommelt oder auf diese aufgetrommelt. Bei Überschreiten der einstellbaren Grenzwerte, die den Stellungen 17 und 18 entsprechen, wird der Hauptantriebsmotor 7 des Fahrzeugs 1 über die Steuerleitung 23 und den Fahrregler 24 abgeschaltet und über die Steuerleitung 25 abgebremst (Fig. 3). Das gleiche geschieht, wenn die Energieversorgungsleitung 3 seitlich über die zulässigen Winkel α abgelenkt wird, wie dies z. B. bei zu scharfem Kurvenfahren auftreten kann. Hierbei wird, wie in Fig. 5 gezeigt, die Tastschwinge 5 seitlich, also in horizontaler Richtung, aus der Normalstellung 16 in Richtung auf die einstellbaren Grenzstellungen 19 und 20 ausgelenkt und bei Überschreiten derselben der Hauptantriebsmotor 7 über die Steuerleitung 23 und den Fahrregler 24 ausgeschaltet und über die Steuerleitung 25 das Fahrzeug 1 abgebremst. Sowohl bei den senkrechten als auch bei den horizontalen Regelwegen der Tastschwinge 5 ist nach Zurücklegen von etwa 80 % des Regelweges eine Steuervorrichtung vorgesehen, die drosselnd auf den Fahrantrieb wirkt, wodurch bei zu schnellem Anfahren die Anfahrgeschwindigkeit reduziert wird. Bei normaler Fahrt legt sich die Energieversorgungsleitung 3 zugspannungs- und torsionsfrei in der Spur des Fahrzeugs 1 ab, wie dies in Fig. 6 bei Durchfahren eines Kreuzungspunktes von zwei Strecken 21 und 22 dargestellt ist.

**Patentansprüche**

1. Elektrisch angetriebenes, gleisloses Untertagefahrzeug (1) mit Energieversorgung durch ortsfeste Energiequellen mittels einer Versorgungsleitung (3), die in Abhängigkeit von der Fahrbewegung zugspannungslos auf eine auf dem Fahrzeug befindliche Speichertrommel (2) auf- und abgetrommelt wird, mit den folgenden Merkmalen auf dem Fahrzeug ist ein Drehstrommotor (7) als Hauptantriebsmotor mit einer Kraftverteilungseinrichtung (8) angeordnet, zwischen dieser und der Speichertrommel (2) ist ein hydrostatischer Antrieb (10, 11, 12) geschaltet, für dessen Steuerung eine Momentenregelung vorgesehen ist, zur Beaufschlagung der Steuerung in Abhängigkeit vom Durchhang der freien, nicht getrommelten Versorgunsleitung (3) ist eine die Versorgungsleitung abtastende, mit Rollen versehene Tastschwinge (5) angeordnet, deren Oszillationssignale über einen Umwandler (14) in Drucksignale umgewandelt werden, die Tastschwinge (5) wird bei unzulässig hoher Anfahrbeschleunigung des Fahrzeugs (1) und/oder Störungen der Speichertrommelfunktion vertikal über vorgegebene Grenzwerte (17, 18) ausgelenkt, und es wird dadurch über Steuervorrichtungen der Hauptantriebsmotor (7) abgeschaltet und das Fahrzeug (1) abgebremst, die Tastschwinge (5) wird bei zu stark abgewinkeltem seitlichen Einlauf der Energieversorgungsleitung (3) horizontal über vorgegebene Grenzwerte (19, 20) ausgelenkt, und es wird dadurch über Steuervorrichtungen der Hauptantriebsmotor (7) abgeschaltet und das Fahrzeug (1) abgebremst, die Tastschwinge (5) drosselt über Steuervorrichtungen nach Zurücklegen von etwa 80 % ihres Regelweges die Leistung des Fahrantriebs.

2. Untertagefahrzeug nach Anspruch 1 mit an der Speichertrommel (2) angeordneter mechanischer Reibungsbremse, die bei Energieausfall oder bei Abschaltung des Fahrzeugantriebes zur Wirkung gelangt.

3. Untertagefahrzeug nach einem der Ansprüche 1 oder 2 mit einem schnellaufenden Hydraulikmotor (11) beim hydrostatischen Trommelantrieb (10) sowie mit einem zwischen diesem und der Speichertrommel (2) angeordneten mechanischen Untersetzungsgetriebe (15).

**Claims**

1. Electrically-driven rail-less underground vehicle (1) having an eregy supply from a fixed energy source by means of a supply cable (3), which, dependent on motion of the vehicle, is wound in tensionless manner onto and off a storage drum (2) located on the vehicle, having the following features : a three-phase electric motor (4) as main drive motor is provided with power distributing means (8), hydrostatic drive means connected between this latter and the storage drum (2), for the control of which a torque adjuster is provided, to actuate the control dependent on the sag of the free, unwound supply cable (3) a sensor rocker arm (5) having rollers is provided, the oscillating signals from which are transformed to a pressure signal by a converter (14), the sensor rocker arm (5) is deflected beyond a predetermined limiting value (17, 18) onto rapid starting acceleration of the vehicle (1) and/or malfunction of the storage drum, and the main drive motor (7) is switched off and the vehicle is braked by way of control means, if the sideways movement of the energy supply cable (3) proceeds horizontally beyond predetermined limits (19, 20), the main drive motor (7) is switched off and the vehicle (1) is braked by way of control means, by way of control means, the sensor rocker arm (5) limits the drive output after completion of about 80 % of its travel.

2. Underground vehicle according to claim 1, having a mechanical friction brake on the storage drum (2), which come into operation on failure of the power supply or if the motor drive is switched off.

3. Underground vehicle according to either claim 1 or claim 2, having a fast-running hydraulic motor (11) in the hydrostatic drive (10) for the drum, and a mechanical reduction gear (15) between it and the storage drum (2).

**Revendications**

1. Véhicule souterrain (1), sans rails, entraîné électriquement, avec une alimentation en énergie à partir de sources d'énergie fixes au moyen d'une canalisation d'alimentation (3) qui, en fonction du déplacement du véhicule, est enroulée sans contrainte de traction sur un tambour de réserve (2) se trouvant sur le véhicule, ou déroulée sans contrainte de traction à partir de ce tambour, avec les particularités suivantes : un moteur à courant triphasé (7), jouant le rôle de moteur d'entraînement principal et pourvu d'un dispositif de répartition d'effort (8), est disposé sur le véhicule, tandis qu'entre ce dispositif de répartition et le tambour de réserve (2) est branché un entraînement hydraulique (10, 11, 12) pour la commande duquel il est prévu une régulation de couple, et pour alimenter cette commande en fonction de la flèche de la canalisation d'alimentation (3) libre et non enroulée, il est prévu un bras oscillant de détection (5), muni de galets, palpant la canalisation d'alimentation, et dont les signaux d'oscillation sont transformés par un convertisseur (14) en signaux de pression, le levier oscillant de détection (5) étant verticalement dévié au-delà de valeurs limites prédéfinies (17, 18) lors d'une accélération au démarrage inadmissiblement élevée du véhicule (1) et/ou lors de perturbations du fonctionnement du tambour de réserve, et le moteur d'entraînement principal (7) étant alors mis hors circuit par l'intermédiaire de dispositifs de commande, tandis que le véhicule (1) est freiné, le levier oscillant de détection (5) étant dévié horizontalement au-delà de valeurs limites prédéfinies (19, 20) lors d'une arrivée latérale trop fortement coudée de la canalisation (3) d'alimentation en énergie et le moteur d'entraînement principal (7) étant alors mis hors circuit par l'intermédiaire de dispositifs de commande, tandis que le véhicule (1) est freiné, le levier oscillant de détection (5) laminant par l'intermédiaire de dispositifs de commande, la puissance de l'entraînement de propulsion après avoir parcouru environ 80 % de sa course de réglage.

2. Véhicule souterrain selon la revendication 1, avec un frein mécanique de friction disposé sur le tambour de réserve (2) et qui devient opérationnel lors d'une panne d'alimentation en énergie ou lors de la mise hors circuit de l'entraînement de propulsion.

3. Véhicule souterrain selon une des revendications 1 ou 2, avec un moteur hydraulique en marche rapide (11) pour l'entraînement hydraulique (10) du tambour ainsi qu'avec une transmission de démultiplication mécanique (15) interposée entre cet entraînement et le tambour de réserve (2).

Fig. 1

Fig. 2

Fig. 3

Fig. 4

0 088 868

Fig. 5

Fig.6